Europäisches Patentamt

European Patent Office

Office européen des brevets

(19)

(11) Veröffentlichungsnummer: **0 006 597**
**B1**

## EUROPÄISCHE PATENTSCHRIFT

(12)

(45) Veröffentlichungstag der Patentschrift:
**09.12.81**

(21) Anmeldenummer: **79102079.5**

(22) Anmeldetag: **23.06.79**

(51) Int. Cl.³: **C 02 F 3/08, C 02 F 3/18**

(54) **Verfahren und Vorrichtung zur Belüftung von Wasser.**

(30) Priorität: **01.07.78 DE 2829006**

(43) Veröffentlichungstag der Anmeldung:
**09.01.80 Patentblatt 80/1**

(45) Bekanntmachung des Hinweises auf die Patenterteilung:
**09.12.81 Patentblatt 81/49**

(84) Benannte Vertragsstaaten:
**AT BE CH DE FR GB IT LU NL SE**

(56) Entgegenhaltungen:
**DE-A-1 944 502**
**DE-A-2 254 804**
**DE-A-2 331 343**
**DE-A-2 340 584**
**FR-A-2 240 190**
**US-A-3 886 074**

(73) Patentinhaber: **Rheintechnik Weiland & Kaspar KG,**
**Grube König, D-6680 Neunkirchen/Saar (DE)**

(72) Erfinder: **Uhlmann, Georg, Ludwig-Schwambstrasse 76,**
**D-5400 Koblenz (DE)**

(74) Vertreter: **Röbe-Oltmanns, Georg, Dr., Dotzheimer**
**Strasse 61, D-6200 Wiesbaden (DE)**

## Verfahren und Vorrichtung zur Belüftung von Wasser

Die Erfindung betrifft ein Verfahren zur Belüftung von Wasser und eine Vorrichtung zur Durchführung dieses Verfahrens.

Es sind Vorrichtungen zur biologischen Abwasserreinigung mit kreisförmigen, als Bewuchsfläche für die als biologischer Rasen anwachsenden Mikroorganismen dienenden Platten bekannt. Diese Platten sind üblicherweise nebeneinander auf einer die Kreismittelpunkte der Platten durchdringenden, antreibbaren Welle angeordnet und tauchen teilweise in das durch das Abwasserbekken fliessende Abwasser ein, wodurch der an der Oberfläche der Platten befindliche Luftsauerstoff mit dem zu reinigenden Abwasser in Berührung gebracht wird. Der Nachteil der Vorrichtung besteht darin, dass der Anteil des eingebrachten Luftsauerstoffs gering ist und zudem infolge der im Vergleich zur äusseren Umfangsgeschwindigkeit der Platten verminderten Umfangsgeschwindigkeit im Bereich der Welle an dieser Stelle der Lufteintrag nochmals vermindert ist.

Aus der DE-A 19 44 502 ist eine Vorrichtung bekannt, bei der zur Verbesserung des Stoffaustausches bezüglich der in der Nähe der Welle befindlichen Bereiche der Mikroorganismen und der Luft bzw. dem Abwasser zwischen den Platten im wesentlichen kreisförmig ausgebildete Flügel exzentrisch angeordnet sind. Beim Eintauchen des Flügels in das Abwasser wird infolge der exzentrischen Anordnung der Flügel zum einen das Abwasser in Richtung auf die Welle umgelenkt, des weiteren auf Grund des sich aus der Exzentrizität sich ergebenden geringer werdenden Querschnittes die Strömungsgeschwindigkeit vergrössert, wodurch erreicht wird, dass auch das in der Nähe der Welle befindliche Abwasser dem Umsetzungsprozess unterzogen wird, obwohl die Abwasserbewegung in diesem Bereich weniger stark ist, als am Umfang der Platten. Gleiches gilt beim Auftauchen der Flügel aus dem Wasser; die zwischen Flügel und Welle befindliche Luft wird durch die Form der Flügel auf eine Bahn in Richtung der Welle gezwungen bei gleichzeitig vergrösserter Strömungsgeschwindigkeit. Trotz der Intensivierung des Stoffaustausches zwischen den in der Nähe der Welle befindlichen Bereichen der Mikroorganismenschicht und der Luft bzw. dem Abwasser weist die dargestellte Vorrichtung den Nachteil auf, dass mit dieser die Menge an Luft, die in das Wasser eingetragen wird, gering ist, da nur diejenige Menge unter die Wasseroberfläche geschleppt werden kann, welche an den Oberflächen der eintauchenden Teile haftet. Abgesehen davon, gelangt die eingeschleppte Luft nicht tief genug unter die Wasseroberfläche, sondern steigt alsbald an die Wasseroberfläche wieder zurück. Dies hat zur Folge, dass der Anteil des mit der Luft eingebrachten Luftsauerstoffs gering ist und deshalb nur eine minimale Belüftung des Wassers zu verzeichnen ist.

Aufgabe vorliegender Erfindung ist es, ein Verfahren zu schaffen, welches es ermöglicht, ohne gleichzeitige Erhöhung der Menge an Luft, die in das Wasser eingetragen wird, die Menge an Sauerstoff zu erhöhen, die vom Wasser gelöst wird.

Diese Aufgabe wird im wesentlichen dadurch gelöst, dass Wasser und Luft durch einen, abwechselnd unterhalb der Wasseroberfläche Wasser und oberhalb der Wasseroberfläche Luft aufnehmenden, die Luft unter die Wasseroberfläche und das Wasser über die Wasseroberfläche fördernden, von der Eintrittsöffnung zur Austrittsöffnung sich ständig verjüngenden Durchgang gedrückt werden und die Luft unterhalb der Wasseroberfläche und das Wasser zumindest teilweise oberhalb der Wasseroberfläche durch die Austrittsöffnung den Durchgang verlassen.

In dem sich von der Eintrittsöffnung zur Austrittsöffnung ständig verjüngenden Durchgang werden sowohl das Wasser als auch die Luft beschleunigt und unter Druck gesetzt. Durch das Unterdrucksetzen wird erreicht, dass die Menge an Sauerstoff, die das Wasser lösen und aus der Luft aufnehmen kann, sich erheblich erhöht. Weil die Luft unterhalb der Wasseroberfläche den Durchgang verlässt und das Wasser zumindest teilweise oberhalb der Wasseroberfläche, wird darüberhinaus eine gute Durchmischung des Wassers erreicht. Weil die Luft den Durchgang durch die Austrittsöffnung erst unterhalb der Wasseroberfläche verlässt und dann im Wasser aufsteigt und das Wasser zumindest teilweise erst oberhalb der Wasseroberfläche aus der Austrittsöffnung des Durchganges ausfliesst, kann das Wasser zusätzlich Sauerstoff aus der Luft aufnehmen.

Zur Durchführung des Verfahrens eignet sich insbesondere eine Vorrichtung, die aus einem, um eine waagrechte Achse umlaufenden, von der Eintrittsöffnung zur Austrittsöffnung sich ständig verjüngenden, ringförmig gebogenen Trichter besteht, der zu einem Teil seines äusseren Ringdurchmessers aus der Wasseroberfläche hervorragt.

Der Trichter läuft mit seiner Eintrittsöffnung nach vorne gerichtet um. Befindet sich die Eintrittsöffnung unterhalb der Wasseroberfläche, tritt das Wasser in diese ein und wird, weil der Trichter sich bis zur Austrittsöffnung ständig verjüngt, also die gleiche Wassermenge durch einen immer enger werdenden Querschnitt strömen muss, erheblich beschleunigt und dabei unter Druck gesetzt. Durch die Beschleunigung wird erreicht, dass das Wasser zumindest teilweise aus der Austrittsöffnung austritt, wenn diese beim Umlauf des Trichters sich oberhalb der Wasseroberfläche befindet. Das aus der Austrittsöffnung austretende, beschleunigte und unter Druck gesetzte Wasser fällt in die Wasseroberfläche zurück, nimmt bei seinem Weg oberhalb der Wasseroberfläche Sauerstoff aus der Luft auf und reisst Luft mit unter die Wasseroberfläche, aus der das Wasser dann Sauerstoff aufnehmen kann. Erreicht die Eintrittsöffnung des umlaufenden Trichters auf der gegenüberliegenden Seite die Oberfläche des Wasser, tritt Luft in den Trichter ein. Bei dem Weg der Eintrittsöffnung des Trichters von der Seite, an der sie aus dem Wasser eintritt, zu der Seite, an der sie in das Wasser eintritt, füllt sich der oberhalb der Wasseroberfläche liegende Teil des Trichters mit Luft. Nach dem Eintreten der Eintrittsöffnung in die Wasseroberfläche fliesst wieder Wasser in den Trichter, welches im Trichter wegen des sich ständig verjüngenden Querschnittes beschleunigt und unter Druck gesetzt wird und dabei gleichzeitig die im Trichter enthaltene Luft unter Druck setzt und in Richtung der Austrittsöffnung beschleunigt und schiebt. So wird erreicht, dass die Luft nicht erst dann durch die Austrittsöffnung des Trichters austritt, wenn diese sich oberhalb der Wasseroberfläche befindet, sondern bereits weit unterhalb der Wasseroberfläche und dann im Wasser aufsteigt. Durch die Druckerhöhung der Luft und des Wassers im Trichter wird die Menge des Luftsauerstoffes, die vom Wasser aufgenommen werden kann, erheblich erhöht. Eine weitere Erhöhung der Menge des vom Wasser aufgenommenen Luftsauerstoffes wird dadurch erreicht, dass aufgrund der Beschleunigung der Luft und des Wassers im Trichter die Luft bereits weit unterhalb der Wasseroberfläche den Trichter verlässt und im Wasser aufsteigt, also Sauerstoff an das Wasser abgeben kann.

Der äussere Umfang des Trichters ist zweckmässig kreisförmig und der innere Umfang spiralförmig gestaltet. Austrittsöffnung und Eintrittsöffnung des Trichters liegen dabei vorteilhaft in geringem Abstand voneinander. Die Querschnittsfläche der Austrittsöffnung soll dabei erheblich geringer sein als die Querschnittsfläche der Eintrittsöffnung und zweckmässig nicht mehr als ein Zehntel betragen, um im Trichter eine ausreichend hohe Beschleunigung und Druckerhöhung des Wassers und der Luft zu erreichen. Der ringförmig gebogene Trichter ragt dabei zweckmässig zur Hälfte bis zu einem Drittel seine äusseren Durchmessers aus der Wasseroberfläche hervor. Die Verjüngung des Trichters vom Austrittsende bis zum Eintrittsende soll stetig erfolgen. Die Umlaufgeschwindigkeit des Trichters sollte regelbar sein, um sie den jeweiligen Gegebenheiten anpassen zu können.

In Wässern, insbesondere Abwässern enthaltene Schadstoffe können vielfach nur durch den Sauerstoff der Luft nicht in unschädliche Stoffe umgesetzt werden. Bei diesen Schadstoffen, die nicht durch Luftsauerstoff umgesetzt werden können, handelt es sich im allgemeinen um Stickstoffverbindungen. Zur Umsetzung solcher Schadstoffe ist es bekannt, Abwässer mit Mikroorganismen, z. B. in Form von Belebtschlamm oder eines biologischen Rasens zu behandeln. Diese Mikroorganismen wandeln die stickstoffhaltigen Schadstoffe in Nitrite und Nitrate um, die, zumindest bei geringen Konzentrationen, für das tierische und pflanzliche Leben im Wasser unschädlich sind. Dabei ist es bekannt, um eine waagerechte Achse umlaufende Scheiben zu verwenden, die zu einem Teil ihres Durchmessers, z. B. zur Hälfte, aus der Wasseroberfläche vorstehen und auf denen sich, auch ohne dass das Wasser geimpft wurde, in relativ kurzer Zeit ein biologischer Rasen bildet, der aus Mikroorganismen besteht, die die im Wasser enthaltenen schädlichen Stickstoffverbindungen in Nitrite und Nitrate umwandeln.

Eine weitere Aufgabe der Erfindung ist es, die Klärung von Wässern, insbesondere Abwässern durch Belüftung und biologischen Rasen zu kombinieren.

Diese Aufgabe wird im wesentlichen gelöst durch eine angetriebene um eine waagerechte Achse umlaufende, zweckmässig kreisförmige Scheibe, die an ihrem Umfang den Trichter trägt.

Auf der umlaufenden Scheibe bildet sich nach relativ kurzer Zeit der biologische Rasen, der aus Mikroorganismen besteht, die die im Wasser enthaltenen, insbesondere stickstoffhaltigen Schadstoffe umsetzen.

Zur Klärung von Abwässern werden dabei mehrere, an ihrem Umfang Trichter tragende Scheiben in geringem Abstand voneinander, vorteilhaft hintereinander und zweckmässig achsial zueinander in einem Becken angeordnet. Die Eintrittsöffnungen und auch die Austrittsöffnungen sollen von Scheibe zu Scheibe gegeneinander versetzt sein, zweckmässig um 45°. Das Becken soll dabei vorzugsweise derart gestaltet sein, dass die aus den einzelnen Scheiben gebildete Walze unterhalb der Wasseroberfläche möglichst dicht bis an die Wandung des Beckens reicht. Zwischen den beiden Scheiben muss ein ausreichender Abstand verbleiben, um sicherzustellen, dass auch zwischen den Scheiben das Wasser bis zur Oberfläche steht, sich auf den Scheiben ein biologischer Rasen bildet und auch zwischen den Scheiben eine ausreichende Durchmischung des Wassers erfolgt, um eine intensive Berührung zwischen dem biologischem Rasen auf den Scheiben und dem Wasser zu erreichen.

Weitere Merkmale der Erfindung sind in der Beschreibung, der Figuren und in den Unteransprüchen dargestellt.

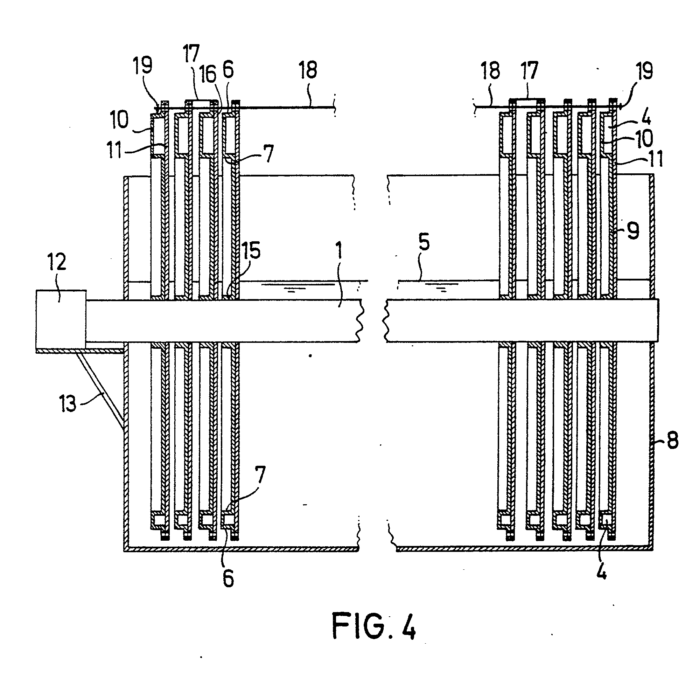

In den Figuren 1 bis 4 ist die Erfindung an Ausführungsformen beispielsweise dargestellt, ohne auf diese Ausführungsformen beschränkt zu sein.

Fig. 1 zeigt eine Aufsicht auf eine an ihrem Umfang einen Trichter tragende Scheibe,

Fig. 2 einen senkrechten Schnitt durch eine Scheibe nach der Linie A-A in Fig. 1, bei der der Trichter durch eine Platte verschlossen ist,

Fig. 3 einen senkrechten Schnitt durch einen Scheibenkörper aus zwei gegensinnig gestalteten Scheiben und

Fig. 4 einen senkrechten Schnitt durch ein Belüftungsbecken.

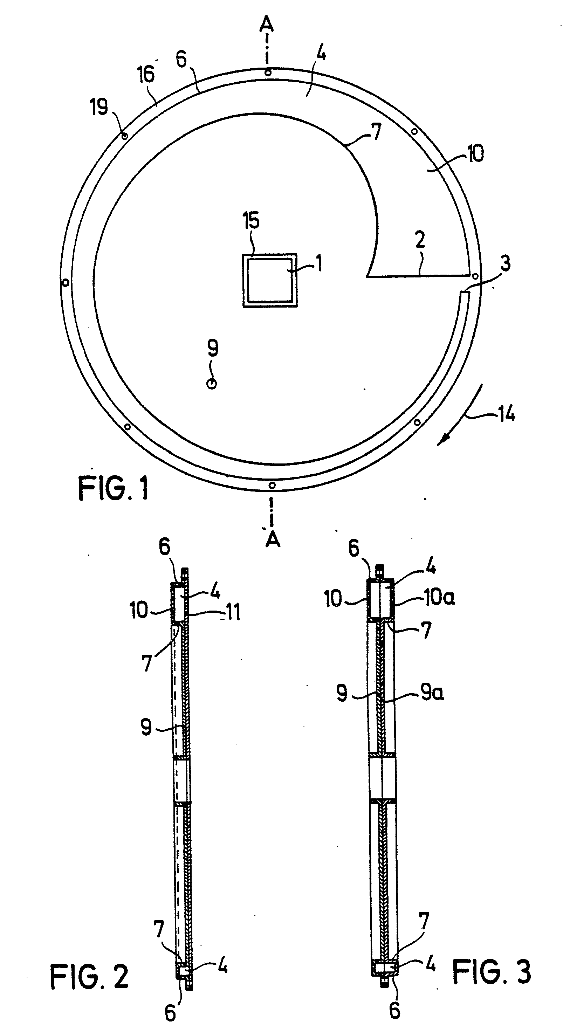

In den Kopfwänden des Belüftungsbeckens 8 ist unterhalb der Wasseroberfläche 5 die Achse 1 gelagert. Angetrieben wird die Achse vom Antrieb 12, der ausserhalb des Beckens 8 auf einer Konsole 13 angeordnet und in an sich bekannter Weise mit der Achse 1 verbunden ist. Im Becken 8 sind auf der Achse 1 in geringem Abstand voneinander die Scheiben 9 angeordnet. Der Querschnitt der Achse 1 innerhalb des Beckens 8 ist zweckmässig mehreckig, insbesondere quadratisch. So wird auf einfachem Wege erreicht, dass die Scheiben 9 sich nicht auf der Achse 1 drehen können. Die Scheiben 9 sind zweckmässig kreisrund. Am äusseren Umfang weisen alle Scheiben 9 gleichgerichtete Auswölbungen 10 auf. Auf den der Auswölbung 10 abgekehrten Seiten der Scheiben 9 sind diese Auswölbungen 10 mittels der Platten 11 verschlossen. Auch die Platten 11 sind zweckmässig kreisförmig gestaltet. Die durch die Auswölbungen 10 und die Platten 11 gebildeten Hohlräume sind trichterförmig ausgebildet. In Fig. 1 ist die Umlaufrichtung mit dem Pfeil 14 angedeutet. Von der Eintrittsöffnung 2 des durch den Hohlraum gebildeten Trichters 4 zur Austrittsöffnung 3 nimmt die Querschnittsfläche des Trichters 4 stetig ab. Dabei soll die Querschnittsfläche der Eintrittsöffnung 2 erheblich grösser sein als die Querschnittsöffnung der Austrittsöffnung 3. Vorteilhaft ist es, wenn die Querschnittsfläche der Austrittsöffnung 3 nicht mehr als ein Zehntel der Querschnittsfläche der Eintrittsöffnung 2 beträgt. Der äussere Umfang 6 des Trichters 4 ist zweckmässig kreisrund, während der innere Umfang 7 vorteilhaft spiralförmig ausgebildet ist. Die Eintrittsöffnung 2 und die Austrittsöffnung 3 liegen in geringem Abstand voneinander. Die Scheiben 9 sollen etwa zur Hälfte bis zu einem Drittel aus der Wasseroberfläche 5 hervorragen. Hergestellt werden die Scheiben 9 aus einem formbaren Material wie Metall oder insbesondere Kunststoff. Die Platten 11 können aus dem gleichen Material bestehen. An der Achse 1 weisen die Scheiben 9 kurze Stutzen 15 auf, die an der Achse 1 liegen und dem Zwecke dienen, ein Kippen der Scheiben 9 zu vermeiden. Die Länge dieser Stutzen 15 entspricht in etwa der Höhe der Auswölbung 10. Ausserhalb des Trichters 4 weisen die Scheiben 9 noch einen Kranz 16 auf. Zwischen zwei Scheiben 19 sind zwischen den beiden Kränzen 16 Distanzmuffen 17 angeordnet, um den erforderlichen Abstand der Scheiben 9 voneinander, insbesondere im Bereich der Trichter 4 sicherzustellen. Durch die Kränze 16 und die Muffen 17 sind Langbolzen 18 geführt, mit denen das aus den einzelnen Scheiben 9 bestehende Paket zusammengehalten wird. Auf die Enden der Langbolzen 18 sind die Muttern 19 geschraubt. Die Eintrittsöffnungen 2 und damit die Austrittsöffnungen 3 der Trichter 4 an den Scheiben 9 sind vorteilhaft von Scheibe 9 zu Scheibe 9 gegeneinander versetzt, vorzugsweise um etwa 45°. Die Scheiben 9 laufen in Richtung des Pfeiles 14 um. Tritt die Eintrittsöffnung 2 in die Wasseroberfläche 5 ein, dringt das Wasser in den Trichter 4 ein. Wegen des sich stetig verjüngenden Querschnittes des Trichters 4 wird das Wasser im Trichter 4 beschleunigt und unter Druck gesetzt. Dadurch wird erreicht, dass das Wasser nicht nur unterhalb der Wasseroberfläche 5 aus der Austrittsöffnung 3 des Trichters 4 austritt, sondern zumindest teilweise erst dann, wenn die Austrittsöffnung 3 des Trichters 4 oberhalb der Wasseroberfläche 5 sich befindet. Erreicht die Eintrittsöffnung 2 des Trichters 4 bei seinem Umlauf auf der dem Eintritt gegenüberliegenden Seite der Achse 1 die Wasseroberfläche, dringt Luft in den Trichter 4 ein u. zwar so lange, bis die Eintrittsöffnung 2 des Trichters 4 wieder in die Wasseroberfläche eintaucht. Ist die Eintrittsöffnung 2 des Trichters 4 wieder in die Wasseroberfläche 5 eingetaucht, wird durch das nunmehr eindringende Wasser die Luft unter Druck gesetzt und in Richtung auf die Austrittsöffnung 3 beschleunigt. Durch die Druckerhöhung wird erreicht, dass das Wasser in erheblich höherem Umfange Sauerstoff aus der Luft aufnimmt, als wenn die Luft nicht unter Druck gesetzt wird. Durch die Beschleunigung der Luft im Trichter 4 wird sichergestellt, dass die Luft die Austrittsöffnung 3 nicht erst dann verlässt, wenn die Austrittsöffnung 3 sich oberhalb der Wasseroberfläche 5 befindet, sondern bereits dann, wenn die Austrittsöffnung 3 noch unterhalb der Wasseroberfläche 5 liegt. Die unterhalb der Wasseroberfläche 5 aus der Austrittsöffnung 3 des Trichters 4 austretende Luft steigt dann im Wasser auf, wobei das Waser Sauerstoff aus der Luft aufnehmen kann. Selbstverständlich nimmt auch das Wasser, welches beim Weg der Austrittsöffnung 3 oberhalb der Wasseroberfläche 5 aus der Austrittsöffnung 3 austritt, Sauerstoff aus der Luft auf und reisst beim Einfallen in die Wasseroberfläche 5 noch Luft mit unter die Wasseroberfläche 5. Bei der Ausführungsform nach Fig. 3 sind zwei gegensinnig gestaltete Scheiben 9 und 9a mit Auswölbungen 10 und 10a, die gemeinsam den Trichter 4 bilden, zu einem Scheibenkörper zusammengefügt.

Um zu vermeiden, dass sich an den Distanzmuffen 17 im Wasser enthaltene Schweb- und Sinkstoffe festsetzen, ist es vorteilhaft, die Stutzen 15 derart zu gestalten, dass der Abstand zwischen der Auswölbung 10 und der Platte 11 zweier benachbarter Scheiben 9 ausreichend gross ist, auf die Distanzmuffen 17 zu verzichten und die Langbolzen 18 in unmittelbarer Nähe der Achse 1 bzw. der Stutzen 15 durch die Scheiben 9 zu führen.

**Ansprüche**

1. Verfahren zur Belüftung von Wasser, dadurch gekennzeichnet, dass Wasser und Luft durch einen, abwechselnd unterhalb der Wasseroberfläche Wasser und oberhalb der Wasseroberfläche Luft aufnehmen, die Luft unter die Wasseroberfläche und Wasser über die Wasseroberfläche fördernden, von der Eintrittsöffnung zur Austrittsöffnung sich ständig verjüngenden Durchgang gedrückt werden und die Luft unterhalb der Wasseroberfläche und das Wasser zumindest teilweise oberhalb der Wasseroberfläche durch die Austrittsöffnung den Durchgang verlassen.

2. Vorrichtung zur Durchführung des Verfahrens nach Anspruch 1, gekennzeichnet durch einen, um eine waagegerechte Achse (1) umlaufenden, von der Eintrittsöffnung (2) zur Austrittsöffnung (3) sich ständig verjüngenden, ringförmig gebogenen Trichter (4), der zu einem Teil aus der Wasseroberfläche (5) ragt.

3. Vorrichtung nach Anspruch 2, dadurch gekennzeichnet, dass der äussere Umfang (6) des Trichters (4) kreisförmig und der innere Umfang (7) spiralförmig gestaltet sind.

4. Vorrichtung nach Anspruch 2 und/oder 3, dadurch gekennzeichnet, dass die Austrittsöffnung (3) und die Eintrittsöffnung (2) des Trichters (4) in geringem Abstand voneinander angeordnet sind.

5. Vorrichtung nach einem oder mehreren der Ansprüche 2 bis 4, dadurch gekennzeichnet, dass der ringförmig gebogene Trichter (4) zu etwa der Hälfte bis zu einem Drittel seines äusseren Ringdurchmessers oberhalb der Wasseroberfläche (5) liegt.

6. Vorrichtung nach einem oder mehreren der Ansprüche 2 bis 5, dadurch gekennzeichnet, dass die Querschnittsfläche der Austrittsöffnung (3) erheblich geringer ist als die Querschnittsfläche der Eintrittsöffnung (2), zweckmässig nicht mehr als ein Zehntel beträgt.

7. Vorrichtung nach einem oder mehreren der Ansprüche 2 bis 6 zur Durchführung des Verfahrens nach Anspruch 1 zur Klärung von unreinem Wasser, insbesondere Abwasser, gekennzeichnet durch eine angetriebene, in einem Becken (8) um eine waagegerechte Achse (1) umlaufende, kreisförmige Scheibe (9), die an ihrem Umfang den Trichter (4) trägt.

8. Vorrichtung nach einem oder mehreren der Ansprüche 2 bis 7, dadurch gekennzeichnet, dass die kreisförmige Scheibe (9) aus formbarem Material, wie Metall oder insbesondere Kunststoff besteht und zur Bildung des Trichters (4) am Umfang eine sich vom Eintrittsende (2) zum Austrittsende (3) ständig verjüngende, zu einer Seite gerichtete Auswölbung (10) aufweist, die auf der anderen Seite mit einer Platte (11) verschlossen ist.

9. Vorrichtung nach Anspruch 8, gekennzeichnet durch zwei kreisförmige Scheiben (9, 9a) aus formbarem Material, wie Metall oder insbesondere Kunststoff, die zur Bildung des Trichters (4) am Umfang sich vom Eintrittsende (2) zum Austrittsende (3) ständig verjüngende, gegensinnig gerichtete Auswölbung (10, 10a) aufweisen und die mit der den Auswölbungen (10, 10a) abgekehrten Fläche miteinander verbunden sind.

10. Vorrichtung nach einem oder mehreren der Ansprüche 2 bis 9, dadurch gekennzeichnet, dass mehrere, an ihrem Umfang Trichter (4) tragende Scheiben (9) hintereinander in geringem Abstand voneinander und axial zueinander im Becken (8) angeordnet sind.

11. Vorrichtung nach Anspruch 10, dadurch gekennzeichnet, dass die Eintritts- und Austrittsöffnungen (2, 3) von Scheibe (9) zu Scheibe (9) gegeneinander versetzt sind.

12. Vorrichtung nach Anspruch 11, dadurch gekennzeichnet, dass die Eintritts- und Austrittsöffnungen (2, 3) von Scheibe (9) zu Scheibe (9) um 45° gegeneinander versetzt sind.

**Claims**

1. Process·for the aeration of water, characterised in that water and air are forced through a passage which continuously narrows from the inlet orifice to the outlet orifice and which alternately takes in water below the water surface and takes in air above the water surface, and which conveys the air to a level below the water surface and conveys the water to a level above the water surface, and, through the outlet orifice, the air leaves the passage below the water surface and the water leaves the passage at least partially above the water surface.

2. Device for carrying out the process according to Claim 1, characterised by a funnel (4) which is bent into the shape of a ring, revolves about a horizontal axis (1), and continuously narrows from the inlet orifice (2) to the outlet orifice (3) and a part of which protrudes from the water surface (5).

3. Device according to Claim 2, characterised in that the outer periphery (6) of the funnel (4) has a circular shape and the inner periphery (7) has a spiral shape.

4. Device according to Claim 2 and/or 3, characterised in that the outlet orifice (3) and the inlet orifice (2) of the funnel (4) are located at a small distance from one another.

5. Device according to one or more of Claims 2 to 4, characterised in that about one half to one third of the outer ring diameter of the funnel (4) bent into the shape of a ring is located above the water surface (5).

6. Device according to one or more of Claims 2 to 5, characterised in that the cross-sectional area of the outlet orifice (3) is considerably smaller than the cross-sectional area of the inlet orifice (2), and advantageously amounts to not more than one tenth.

7. Device according to one or more of Claims 2 to 6, for carrying out the process according to Claim 1, for clarifying impure water, in particular effluent, characterised by a driven circular disc (9) which revolves in a basin (8) about a horizontal axis (1) and carries the funnel (4) on its periphery.

8. Device according to one or more of Claims 2 to 7, characterised in that the circular disc (9) consists of a formable material, such as metal or especially plastic, and has a bulge (10) on the periphery in order to· form the funnel (4), which bulge continuously narrows from the inlet end (2) to the outlet end (3), points to one side and is closed on the other side by a plate (1).

9. Device according to Claim 8, characterised by two circular discs (9, 9a) of a formable material, such as metal or especially plastic, which have bulges (10, 10a) on the periphery in order to form the funnel (4), which bulges continuously narrow from the inlet end (2) to the outlet end (3) and point in opposite directions, the discs being mutually joined by the surface which faces away from the bulges (10, 10a).

10. Device according to one or more of Claims 2 to 9, characterised in that several discs (9) which carry funnels (4) on their periphery are arranged one behind the other in the basin (8) at a small mutual distance, axially relative to one another.

11. Device according to Claim 10, characterised in that the inlet and outlet orifices (2, 3) are mutually offset from disc (9) to disc (9).

12. Device according to Claim 11, characterised in that the inlet and outlet orifices (2, 3) are mutually offset by 45° from disc (9) to disc (9).

**Revendications**

1. Procédé pour l'aération de l'eau caractérisé en ce que l'eau et l'air sont mis en pression par un passage se rétrécissant constamment depuis l'orifice d'entrée jusqu'a l'orifice de sortie et qui capte alternativement l'eau au dessous du niveau de l'eau et l'air au dessus du niveau de l'eau et qui transporte l'air au dessous du niveau de l'eau et l'eau au dessus du niveau de l'eau, l'air étant abandonné au dessous du niveau de l'eau et l'eau au moins partiellement au dessus du niveau de l'eau par l'orifice de sortie de passage.

2. Dispositif pour la mise en œuvre du procédé selon la revendication 1, caractérisé en ce qu'il comporte un entonnoir (4) courbé en forme d'anneau s'enroulant autour d'un axe (1) horizontal et se rétrécissant constamment de son orifice d'entrée (2) à son orifice de sortie (3), cet entonnoir émergeant en partie du niveau (5) du liquide.

3. Dispositif selon la revendication 2, caractérisé en ce que le contour externe (6) de l'entonnoir (4) est prévu circulaire, tandis que son contour interne (7) est prévu en forme de spirale.

4. Dispositif selon l'une quelconque des revendications 2 et 3, caractérisé en ce que l'orifice de sortie (3) et l'orifice d'entrée (2) de l'entonnoir (4) sont disposés à faible distance l'un de l'autre.

5. Dispositif selon l'une quelconque des revendications 2 à 4, caractérisé en ce que l'entonnoir (4) courbé en forme d'anneau, se situe pour environ un tiers jusqu'à environ la moitié de son diamètre externe au-dessus du niveau (5) de l'eau.

6. Dispositif selon l'une quelconque des revendications 2 à 5, caractérisé en ce que la surface transversale de l'orifice de sortie (3) est beaucoup plus réduite que la surface transversale de l'orifice d'entrée (2) et avantageusement n'en dépasse pas le dixième.

7. Dispositif selon l'une quelconque des revendications 2 à 6, destiné à la mise en œuvre du procédé pour la clarification d'eau impure, notamment d'eau usée, dispositif caractérisé en ce qu'il comporte un disque circulaire entraîné (9) tournant dans un bac (8) autour d'un axe horizontal (1) et qui porte à sa périphérie l'entonnoir (4).

8. Dispositif selon l'une quelconque des revendications 2 à 7, caractérisé en ce que le disque circulaire (9) est constitué d'un matériau susceptible d'être mis en forme, tel que du métal ou notamment de la matière plastique, et, pour constituer l'entonnoir (4), comporte à sa périphérie un galbe (10) dirigé vers un côté et se rétrécissant constamment de l'extrémité d'entrée (2) vers l'extrémité de sortie (3), ce galbe étant fermé sur l'autre côté par une plaque (11).

9. Dispositif selon la revendication 8, caractérisé en ce qu'il comporte deux disques circulaires (9, 9a) constitués d'un matériau susceptible d'être mis en forme, tel que du métal ou notamment de la matière plastique, ces disques comportant sur leur périphérie, pour constituer l'entonnoir (4) des galbes (10, 10a) dirigés vers des côtés opposés et se rétrécissant constamment depuis l'extrémité d'entrée (2) vers l'entrémité de sortie (3), ces disques étant reliés ensemble par leurs surfaces opposées aux galbes (10, 10a).

10. Dispositif selon l'une quelconque des revendications 2 à 9, caractérisé en ce que plusieurs disques (9) portant à leur périphérie un entonnoir (4) sont disposés à faible distance les uns des autres et co-axialement les uns par rapport aux autres dans un bac (8).

11. Dispositif selon la revendication 10, caractérisé en ce que les orifices d'entrée et de sortie (2, 3) sont décalés l'un par rapport à l'autre, de disque (9) en disque (9).

12. Dispositif selon la revendication 11, caractérisé en ce que les orifices d'entrée et de sortie (2, 3) sont décalés de 45° l'un par rapport à l'autre de disque (9) en disque (9).

FIG. 1

FIG. 2

FIG. 3

FIG. 4